# EUROPÄISCHE PATENTSCHRIFT

(11) **EP 3 450 294 B1**
(45) Veröffentlichungstag und Bekanntmachung des Hinweises auf die Patenterteilung: **11.03.2020**
(21) Anmeldenummer: 17188440.6
(22) Anmeldetag: 29.08.2017
(51) Int. Cl.: B62K 21/22, B62J 99/00, F16B 7/14

(54) **HÖHENVERSTELLBARE LENKEINRICHTUNG FÜR KLEINFAHRZEUGE**
HEIGHT ADJUSTABLE STEERING DEVICE FOR SMALL VEHICLES
DISPOSITIF DE DIRECTION RÉGLABLE EN HAUTEUR POUR PETITS VÉHICULES

(43) Veröffentlichungstag der Anmeldung: 06.03.2019
(73) Patentinhaber: Brake Force One GmbH, 72074 Tübingen (DE)
(72) Erfinder: VOITL, Peter, 75179 Pforzheim (DE); STARK, Stefan, 51598 Friesenhagen (DE)
(74) Vertreter: Kohler Schmid Möbus Patentanwälte

(56) Entgegenhaltungen:
- CN-A- 104 627 292
- CN-U- 204 895 732
- CN-U- 205 707 074
- US-A1- 2008 264 196

## Beschreibung

Die Erfindung betrifft eine Lenkeinrichtung für durch Muskelkraft und/oder elektrisch betriebene Kleinfahrzeuge mit einem Querlenker, der an einer höhenverstellbaren Lenkstange angeordnet ist, wobei die Lenkstange zwei teleskopierbare Rohre aufweist und das innere Rohr mindestens zwei, in unterschiedlicher Höhe angebrachte Öffnungen oder Nuten aufweist, in die ein im äußeren Rohr radial beweglich gelagertes Rastelement einrastbar ist.

Solche Lenkeinrichtungen sind insbesondere an Fahrzeugen wie Fahrrädern, zwei- oder dreirädrigen Tretrollern oder *Hoverboards* vorgesehen.

Die zunehmende Überlastung der städtischen Straßenverkehrsinfrastruktur, die Verknappung von Parkraum sowie Umweltbelastungen erfordern neue, nachhaltige Individualmobilitätslösungen für die Stadt von morgen. Ein wesentlicher Schlüssel zur Lösung dieser Herausforderung liegt in der optimalen Verknüpfung verschiedener Transportformen. Durch moderne Informations- und Kommunikationstechnologien ist die optimale Routenplanung von Tür zu Tür unter Nutzung vieler verfügbarer Transportmittel schon heute möglich. Eine Herausforderung stellt dabei jedoch die Überbrückung der Wege zwischen verschiedenen Verkehrsmitteln dar. Hier wächst der Bedarf an jederzeit mitführbaren Mikromobilitätslösungen zur Überbrückung der Distanzen zwischen Hauptverkehrsmittel und Ziel (Letzte-Meile-Mobilität). Dafür lassen sich die oben beschriebenen Fahrzeuge, insbesondere wenn sie zerlegbar oder zusammenfaltbar sind, mit Erfolg einsetzen.

Auch der Trend zum Individualurlaub mit Wohnwagen, Yacht und Auto ist ungebrochen groß. In diesem Bereich ist der Bedarf an kleinen kompakten Fahrzeugen (Falträder, Tretroller, elektrische Tretroller, ...) ebenfalls enorm groß. Weiterhin werden Mikromobilitätslösungen überall dort vermehrt zum Einsatz kommen, wo kleine Distanzen oft und in kurzer Zeit überbrückt werden müssen. Dazu gehören z. B. große Werksgelände, Messen, Flughäfen, Innenstädte und andere öffentliche und private Gelände.

Bei all diesen Kleinfahrzeugen ist eine teleskopierbare Lenkstange zur Verstellung der Lenkerhöhe sehr wichtig. Nur dadurch ist ein ergonomisches Fahren mit diesen Fahrzeugen möglich. Außerdem ermöglicht eine teleskopierbare Lenkstange auch ein sehr kleines Packmaß für die Fahrzeuge, sodass diese problemlos in einem Kofferraum, in der Bahn oder in einem Wohnmobil verstaut werden können.

Grundsätzlich ist bei der Höhenverstellung teleskopierbarer Rohre zwischen zwei Arretierungsarten zu unterscheiden. Einerseits kann die Höhenverstellung wie bei Besenstielen, Sattelstützen oder Fotostativen über Verdrehverschlüsse, die festgedreht werden müssen, kraftschlüssig erfolgen oder die Teleskoprohre werden über einen Formschluss verstellt. Durch einen Formschluss, der über Pins, Kugeln oder anders geartete Steckverbindungen hergestellt werden kann, können Teleskoprohre an vordefinierten Positionen eingerastet oder eingestellt werden.

An den derzeit bekannten Kleinfahrzeugen mit teleskopierbarer Lenkstange erfolgt die Lenkerhöhenverstellung in der Regel durch eine Kombination aus Kraft- und Formschluss. Ein Schnellspanner klemmt das äußere Lenkrohr am ausziehbaren Lenkrohr fest und durch Federn arretierte Kugeln verhindern ein Verrutschen und somit eine ungewollte Höhenverstellung der Lenkstange. Zum Verstellen der Lenkerhöhe muss zunächst der Schnellspanner gelöst und die Kugel aus ihrem Sitz im Lenkrohr gedrückt werden. Wenn zur individuellen Anpassung der Lenkerhöhe mehrere Kugelaussparungen vorgesehen sind, dann muss bei jeder dieser Aussparungen die Kugel erneut gedrückt werden, bis der Lenker die gewünschte Höhe erreicht hat.

Aus der US 2008/264196 A1 ist ein Fahrzeug mit einer höhenverstellbaren Lenkstange bekannt, bei der zwei ineinander geführte Lenkrohrhälften über Rastkugeln höhenverstellbar miteinander verbunden sind. Die Rastkugeln werden von einem unbeabsichtigten Lösen von einer Klemmhülse abgehalten, die sich durch die Kraft einer Feder über die Verbindungsstelle der beiden Lenkrohrhälften schiebt. Die US 2008/264196 A1 offenbart eine Lenkeinrichtung gemäß dem Oberbegriff des Anspruchs 1.

Der vorliegenden Erfindung liegt die Aufgabe zugrunde, eine Lenkeinrichtung für Kleinfahrzeuge mit einer teleskopierbaren Lenkstange zu schaffen, die eine rasche Anpassung der Lenkstangenhöhe erlaubt. Die Aufgabe wird gelöst durch eine Lenkeinrichtung mit den Merkmalen des Anspruchs 1.

Durch ein Bewegen der Klemmhülse entgegen der Kraft der Feder auf das äußere Rohr zu, gibt der konische Endabschnitt der Klemmhülse die Außenfläche des Rastelements frei, sodass jetzt das innere Rohr im äußeren Rohr frei verschoben werden kann. Das Rastelement wird dabei aus der Öffnung oder Nut radial nach außen gedrückt. Es rastet erst wieder in eine neue Öffnung oder Nut ein, wenn die Klemmhülse losgelassen wird und sich damit durch die Kraft der Feder wieder vom äußeren Rohr wegbewegt, sodass ihr konischer Endabschnitt wieder die Außenfläche des Rastelements beaufschlagt und radial nach innen drückt. Dadurch kann mit nur einem Handgriff die Arretierung der Lenkstange gelöst und eine Höhenverstellung der Lenkstange vorgenommen werden. Ein aktives Herausdrücken des Rastelements von Hand aus jeder vorhandenen Rastöffnung kann bei dieser Lösung entfallen. Vorzugsweise kann die Außenfläche des Rastelements entsprechend dem konischen Endabschnitt der Klemmhülse ebenfalls konisch gestaltet sein. Dadurch kann eine sichere Selbsthemmung der Lenkstange erzielt werden, die sicherstellt, dass sich die Lenkstangenhöhe nicht ungewollt durch Belastung des Querlenkers verstellt.
Die Feder ist zwischen einer ersten, verdrehsicher im Endabschnitt des äußeren Rohres angeordneten Gleitbuchse mit einer radialen Durchtrittsöffnung für das Rastelement und einer zweiten, das innere Rohr umfassenden Gleitbuchse angeordnet und die Klemmhülse ist an der zweiten
Gleitbuchse befestigt. Die Klemmhülse kann dadurch zusammen mit der zweiten Gleitbuchse entlang des inneren Rohres verschoben werden.
Weitere Vorteile ergeben sich, wenn das innere Rohr einen abgeflachten Umfangsabschnitt aufweist und die erste Gleitbuchse an ihrem inneren Umfang einen entsprechenden abgeflachten Abschnitt aufweist, sodass die abgeflachten Abschnitte des inneren Rohres und der ersten Gleitbuchse eine Verdrehsicherung des inneren Rohres gegenüber dem äußeren Rohr bilden. Außerdem sorgen die beiden korrespondierenden abgeflachten Abschnitte der Drehmomentübertragung zwischen dem inneren Rohr mit dem Querlenker und dem äußeren Rohr, das mit einer Achse für das oder die Räder des Fahrzeugs verbunden ist.
Weiter können die Öffnungen oder Nuten im abgeflachten Umfangsabschnitt des inneren Rohres angeordnet sein. Dadurch ist es einfach möglich, das Rastelement in dem sich zwischen dem abgeflachten Abschnitt des inneren Rohres und dem äußeren Rohr vorhandenen Hohlraum anzuordnen. Es können dadurch von der Kugelform abweichende Rastelemente, beispielsweise im Wesentlichen keilförmige Elemente eingesetzt werden.
Es kann außerdem vorgesehen sein, dass der innere Rand der ersten Gleitbuchse eine Auszugssicherung für das innere Rohr bildet, das an seinem Ende mit einer radial eingedrehten Schraube versehen ist, die gegen den unteren Rand der ersten Gleitbuchse anschlägt, wenn das innere Rohr zu weit aus dem äußeren Rohr ausgezogen wird. Für die Montage der Lenkeinrichtung ist es dabei vorteilhaft, wenn im äußeren Rohr eine Zugangsöffnung zur Schraube am inneren Rohr vorgesehen ist und die Zugangsöffnung durch einen Ringkörper nach außen abdeckbar ist, wobei der Ringkörper einen Anschlag für die Bewegung der Klemmhülse bildet. Der Ringkörper bildet dann nicht nur eine Abdeckung für die Zugangsöffnung, sondern gleichzeitig einen die Bedienung der Klemmhülse erleichternden Anschlag bei deren Bewegung zur Lösung der Arretierung der Lenkstange.

Zur Erleichterung des Verschiebens des inneren Rohres im äußeren Rohr können die Ränder der Öffnungen oder Nuten des inneren Rohres und die äußere Kontur des Rastelements zweckmäßigerweise derart gestaltet sein, dass bei Freigabe der Außenfläche des Rastelements durch den konischen Abschnitt der Klemmhülse das Rastelement allein durch Bewegen des inneren Rohres relativ zum äußeren Rohr aus den Öffnungen oder Nuten des inneren Rohres herausbewegbar ist. Dazu können die Schlitz- oder Öffnungsränder insbesondere abgerundet sein.

Korrespondierend dazu kann auch die Spitze des Rastelements eine gerundete Form aufweisen.
Die Feder kann vorzugsweise eine Schraubenfeder sein.

Beim Einsatz der Lenkeinrichtung für ein elektrisch angetriebenes Fahrzeug und/oder zur Ansteuerung hydraulischer Bremssysteme können im Inneren der Rohre elektrische und/oder hydraulische Leitungen geführt sein.

Zum Ausgleich der Längenänderung der Lenkstange können dabei die Leitungen bevorzugt spiralförmig ausgebildet sein.

Außerdem wird eine nicht beanspruchte Lenkeinrichtung für durch Muskelkraft und/oder elektrisch betriebene Kleinfahrzeuge offenbart, die einen Querlenker, der an einer höhenverstellbaren Lenkstange angeordnet ist, aufweist, wobei die Lenkstange zwei teleskopierbare Rohre aufweist und das innere Rohr mindestens zwei, in die ein im äußeren Rohr radial beweglich gelagertes Rastelement einstellbar ist, wobei eine Höhenverstell- und Arretiereinrichtung vorgesehen ist, die eine beide Rohre an ihrer Verbindungsstelle umfassende Klemmhülse aufweist, die entgegen der Kraft einer Drehfeder rotierbar ist und die auf ihrer Innenseite mit einem exzentrisch verlaufenden, das äußere Rohr umgreifenden Wandungsabschnitt versehen ist, der im entspannten Zustand der Drehfeder auf eine durch eine Öffnung im äußeren Rohr radial nach außen ragende Außenfläche des Rastelements einwirkt und dadurch das Rastelement radial nach innen drückt und bei einer Drehbewegung der Klemmhülse entgegen der Kraft der Drehfeder das Rastelement freigibt.

Das Rastelement wird bei dieser nicht beanspruchten Lenkeinrichtung somit nicht durch eine Verschiebebewegung einer Klemmhülse, sondern durch eine Drehbewegung der Klemmhülse entriegelt. Auch bei dieser nicht beanspruchten Lenkeinrichtung ist eine
Entriegelung und Verriegelung der Rastverbindung der beiden Rohre mit einem Handgriff möglich. Das innere Rohr kann ebenfalls einen abgeflachten Abschnitt als Drehsicherung aufweisen, wobei die Nuten oder Schlitze zur Aufnahme des Rastelements in diesem abgeflachten Abschnitt angeordnet sind.
Im Folgenden wird ein bevorzugtes Ausführungsbeispiel einer erfindungsgemäßen Lenkeinrichtung mit Bezug auf die Zeichnung im Detail beschrieben.
Es zeigen dabei:
- Fig. 1: eine Frontansicht einer erfindungsgemäßen Lenkeinrichtung;
- Fig. 2: einen Längsschnitt durch die Lenkeinrichtung aus Fig. 1;
- Fig. 3: eine vergrößerte Detaildarstellung des Längsschnittes aus Fig. 2;
- Fig. 4: einen Querschnitt durch die Lenkeinrichtung aus Fig. 1 entlang der Linie IV-IV;
- Fig. 5: eine Detailansicht einer Gleitbuchse der Lenkeinrichtung aus Fig. 1.

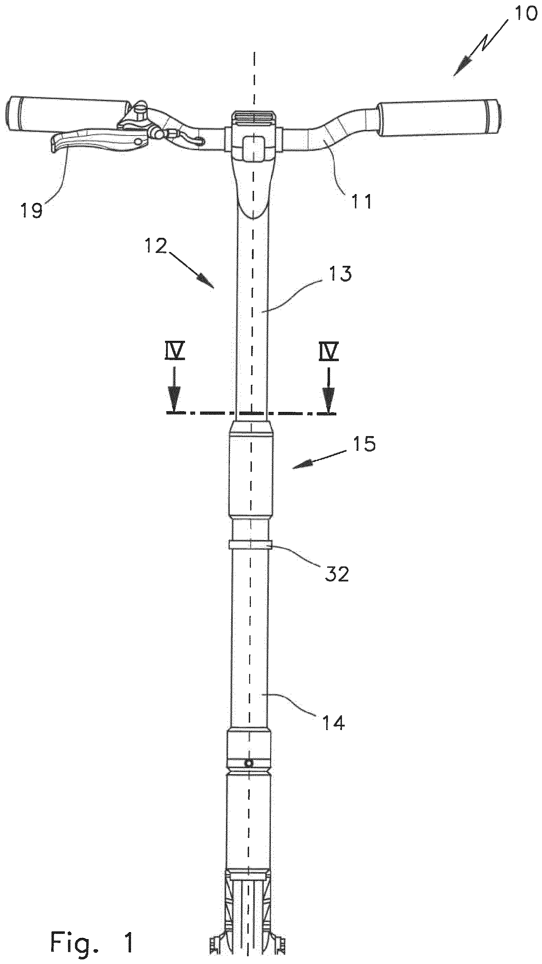

Fig. 1 zeigt eine Lenkeinrichtung 10 für ein hier nicht näher dargestelltes Kleinfahrzeug mit einem Querlenker 11, der an einer Lenkstange 12 befestigt ist. Die Lenkstange 12 wird von zwei teleskopierbaren Rohren 13 und 14 gebildet, wobei das Rohr 13 im äußeren Rohr 14 geführt ist. Im Verbindungsbereich der Rohre 13, 14 ist eine Höhenverstell- und Arretiereinrichtung 15 angeordnet.

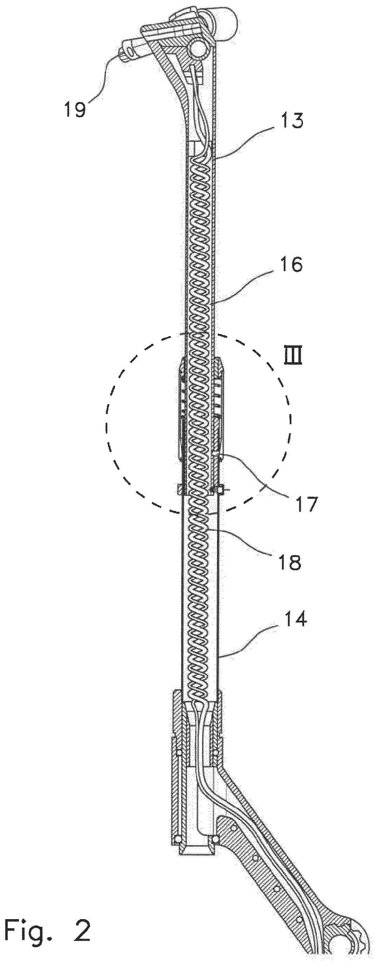

Wie der Längsschnitt aus Fig. 2 verdeutlicht, weist das innere Rohr 13 zwei Rastnuten 16, 17 auf, die zusammen mit der Höhenverstell- und Arretiereinrichtung 15 zwei unterschiedliche Höheneinstellungen für die Lenkstange 12 definieren. Im Inneren der Rohre 13, 14 sind außerdem spiralförmige elektrische und hydraulische Leitungen 18 geführt, die beispielsweise einen Bremshebel 19 am Querlenker 11 mit einer hier nicht weiter dargestellten hydraulischen Bremse verbinden. Durch die Spiralform können die Leitungen 18 eine Längenänderung der Lenkstange 12 ausgleichen.

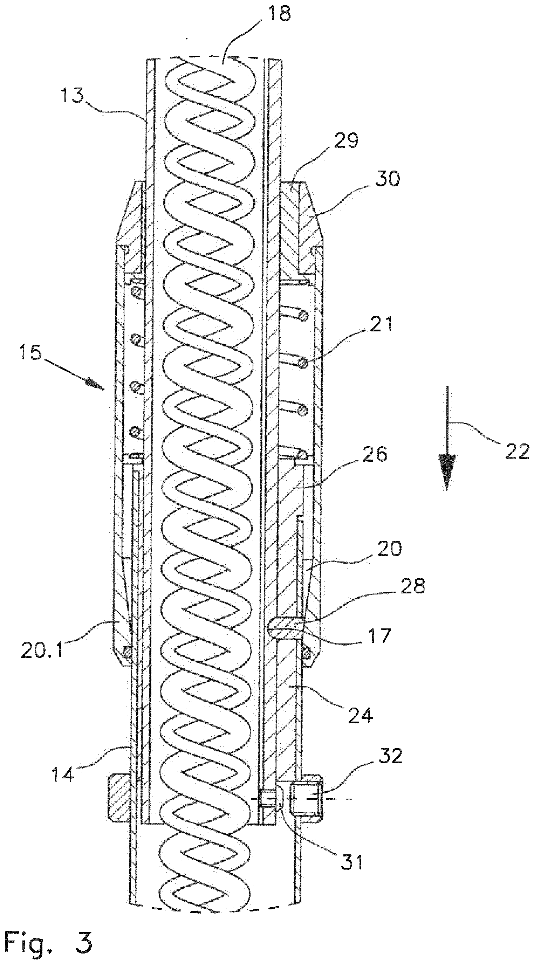

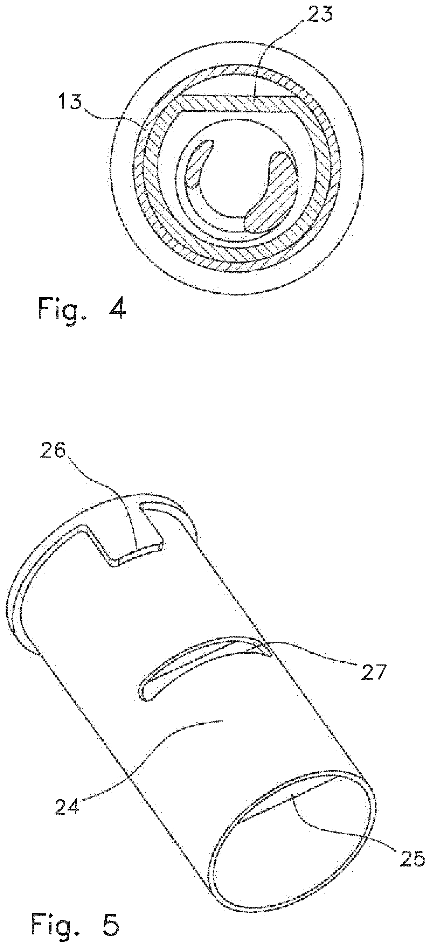

Fig. 2 und insbesondere die Detaildarstellung aus Fig. 3 verdeutlichen den Aufbau der Höhenverstell- und Arretiereinrichtung 15.
Die Arretier- und Höhenverstelleinrichtung 15 weist eine Klemmhülse 20 auf, die sich über den Verbindungsbereich der beiden Rohre 13 und 14 hinweg erstreckt und die entgegen der Kraft einer Feder 21 in Pfeilrichtung 22 verschiebbar ist. Das innere Rohr 13 weist dabei einen abgeflachten Umfangsabschnitt 23 auf, wie insbesondere aus der Schnittdarstellung der Fig. 4 ersichtlich ist. In Fig. 3 ist die Abflachung am größeren Abstand der Klemmhülse 20 zum inneren Rohr 13 auf der rechten Seite der Zeichnung zu erkennen. Im äußeren Rohr 14 ist eine Gleitbuchse 24 eingesetzt, die eine korrespondierende Abflachung 25 aufweist, wie Fig. 5 verdeutlicht. Außerdem ist die Gleitbuchse 24 mit einem Eingriff 26 versehen, die in eine entsprechende Aussparung am äußeren Rohr 14 eingreift. Dadurch ist die Gleitbuchse 24 verdrehsicher im äußeren Rohr 14 verankert. Die beiden Abflachungen 23, 25 sorgen dafür, dass sich auch das innere Rohr 13 nicht gegenüber dem äußeren Rohr 14 verdrehen kann. Außerdem ist über die beiden Abflachungen 23, 25 eine Drehmomentübertragung zwischen den Rohren 13, 14 möglich, sodass die Lenkbewegungen am Querlenker 11 auf hier nicht dargestellte Räder des Fahrzeugs übertragen werden können.

Sowohl die Gleitbuchse 24 als auch das äußere Rohr 14 weisen eine schlitzförmige Öffnung 27 (siehe Fig. 5) auf, in der ein Rastelement 28 radial verschieblich gelagert ist. Das Rastelement 28 weist auf seiner radial äußeren Seite eine Schräge auf, die mit einem konischen Endabschnitt 20.1 der Klemmhülse 20 zusammenwirkt. Wird die Klemmhülse 20 nicht von Hand in Pfeilrichtung 22 bewegt, so drückt sie die Feder 21 in die in Fig. 3 gezeigte oberste Position, in der der konische Endabschnitt 20.1 der Klemmhülse 20 das Rastelement radial nach innen in die Nut 17 des inneren Rohres 13 drückt. Damit sind die beiden Rohre 13, 14 in dieser Höhenposition miteinander verrastet.

Zur Bewegung der Klemmhülse 20 ist am inneren Rohr eine zweite Gleitbuchse 29 angeordnet, die das innere Rohr 13 umgreift und einen oberen Anschlag für die Schraubenfeder 21 bildet. Die Gleitbuchse 29 wird von einem Abdeckring 30 umfasst, an dem die Klemmhülse 20 befestigt ist. Durch Verschieben des Abdeckrings 30 zusammen mit der Gleitbuchse 29 und der Klemmhülse 20 löst sich deren konischer Endabschnitt 20.1 vom Rastelement 28. Es entsteht dadurch ein Hohlraum zwischen dem Rastelement 28 und der Klemmhülse 20, der es ermöglicht, durch ein Verschieben des inneren Rohres 13 im Rohr 14 das Rastelement 28 aus der Nut 17 im inneren Rohr 13 radial nach außen herauszubewegen, sodass beispielsweise das innere Rohr 13 vollständig in das äußere Rohr 14 eingefahren werden kann, bis das Rastelement 28 der Nut 16 im inneren Rohr gegenüberliegt. Durch Loslassen der Klemmhülse 20 bzw. des Abdeckrings 30 bewegt sich die Klemmhülse 20 durch die Federkraft nach oben und der konische Endabschnitt 20.1 der Klemmhülse 20 drückt das Rastelement 28 in die Nut 16. Die beiden Rohre 13, 14 sind dann in dieser Stellung miteinander verrastet. Es versteht sich, dass im inneren Rohr 13 mehr als nur zwei Nuten 16, 17 vorgesehen sein können, sodass eine beliebige Längenverstellung der Lenkstange 12 möglich ist.

Als Auszugssicherung für das innere Rohr 13 ist eine Schraube 31 in das untere Ende des inneren Rohres 13 eingedreht. Diese Schraube 31 schlägt am unteren Rand der Gleitbuchse 24 an, wenn das Rohr 13 zu weit nach oben gezogen wird. Eine für das Eindrehen der Schraube 31 erforderliche Zugangsöffnung im äußeren Rohr 14 ist durch einen Ring 32 abgedeckt, der wiederum einen unteren Anschlag für die Bewegung der Klemmhülse 20 bildet.

Die Form der Rohre 13, 14 ist unter Berücksichtigung und Beibehaltung der gegenseitigen Verdrehsicherung frei gestaltbar. Weitere denkbare Ausführungsformen sind ovale, rechteckige oder runde, mit einer entsprechenden Teleskopierführung versehene teleskopierbare Rohre 13, 14.

## Patentansprüche

1. Lenkeinrichtung für durch Muskelkraft und/oder elektrisch betriebene Kleinfahrzeuge mit einem Querlenker (11), der an einer höhenverstellbaren Lenkstange (12) angeordnet ist, wobei die Lenkstange (12) zwei teleskopierbare Rohre (13, 14) aufweist und das innere Rohr (13) mindestens zwei, in unterschiedlicher Höhe angebrachte Öffnungen oder Nuten (16, 17) aufweist, in die ein im äußeren Rohr (14) radial beweglich gelagertes Rastelement (28) einrastbar ist, und wobei eine Höhenverstell- und Arretiereinrichtung (15) vorgesehen ist, die eine beide Rohre (13, 14) an ihrer Verbindungsstelle umfassende Klemmhülse (20) aufweist, die entgegen der Kraft einer Feder (21) entlang des inneren Rohres (13) in Richtung äußeres Rohr (14) verschiebbar ist und die auf ihrer Innenseite mit einem sich konisch verjüngenden, das äußere Rohr (14) umgreifenden Endabschnitt (20.1) versehen ist, der im entspannten Zustand der Feder (21) auf eine durch eine Öffnung im äußeren Rohr (14) radial nach außen ragende Außenfläche des Rastelements (28) einwirkt und dadurch das Rastelement (28) radial nach innen drückt, **dadurch gekennzeichnet, dass** die Feder (21) zwischen einer ersten, verdrehsicher im Endabschnitt des äußeren Rohres (14) angeordneten Gleitbuchse (24) mit einer radialen Durchtrittsöffnung (27) für das Rastelement (28) und einer zweiten, das innere Rohr (13) umfassenden Gleitbuchse (29) angeordnet ist und die Klemmhülse (20) mit der zweiten Gleitbuchse (29) verbunden ist.

2. Lenkeinrichtung nach Anspruch 1, **dadurch gekennzeichnet, dass** die Außenfläche des Rastelements (28) entsprechend dem konischen Endabschnitt (20.1) der Klemmhülse (20) ebenfalls sich verjüngend gestaltet ist.

3. Lenkeinrichtung nach Anspruch 1 oder 2, **dadurch gekennzeichnet, dass** das innere Rohr (13) einen abgeflachten Umfangsabschnitt (23) aufweist und die erste Gleitbuchse (24) an ihrem inneren Umfang einen entsprechenden abgeflachten Abschnitt (25) aufweist, sodass die abgeflachten Abschnitte (23, 25) des inneren Rohres (13) und der ersten Gleitbuchse (24) eine Verdrehsicherung des inneren Rohres (13) gegenüber dem äußeren Rohr (14) bilden.

4. Lenkeinrichtung nach Anspruch 3, **dadurch gekennzeichnet, dass** die Öffnungen oder Nuten (16, 17) im abgeflachten Umfangsabschnitt (23) des inneren Rohres (13) angeordnet sind.

5. Lenkeinrichtung nach einem der vorhergehenden Ansprüche, **dadurch gekennzeichnet, dass** der untere Rand der ersten Gleitbuchse (24) eine Auszugssicherung für das innere Rohr (13) bildet, das an seinem Ende mit einer radial eingedrehten Schraube (31) versehen ist, die gegen den unteren Rand der ersten Gleitbuchse (24) anschlägt, wenn das innere Rohr (13) zu weit aus dem äußeren Rohr (14) ausgezogen wird.

6. Lenkeinrichtung nach Anspruch 5, **dadurch gekennzeichnet, dass** im äußeren Rohr (14) eine Zugangsöffnung zur Schraube (31) am inneren Rohr vorgesehen ist und die Zugangsöffnung durch einen Ringkörper (32) nach außen abdeckbar ist, wobei der Ringkörper (32) einen Anschlag für die Bewegung der Klemmhülse (20) bildet.

7. Lenkeinrichtung nach einem der vorhergehenden Ansprüche, **dadurch gekennzeichnet, dass** die Ränder der Öffnungen oder Nuten (16, 17) des inneren Rohres (13) und die äußere Kontur des Rastelements (28) derart gestaltet sind, dass bei Freigabe der Außenfläche des Rastelements (28) durch den konischen Abschnitt (20.1) der Klemmhülse (20) das Rastelement (28) allein durch Bewegen des inneren Rohres (13) relativ zum äußeren Rohr (14) aus den Öffnungen oder Nuten (16, 17) des inneren Rohres (13) herausbewegbar ist.

8. Lenkeinrichtung nach einem der vorhergehenden Ansprüche, **dadurch gekennzeichnet, dass** die Feder (21) eine Schraubenfeder ist.

9. Lenkeinrichtung nach einem der vorhergehenden Ansprüche, **dadurch gekennzeichnet, dass** im Inneren der Rohre (13, 14) elektrische und/oder hydraulische Leitungen (18) geführt sind.

10. Lenkeinrichtung nach Anspruch 9, **dadurch gekennzeichnet, dass** die Leitungen (18) spiralförmig ausgebildet sind.

## Claims

1. Steering device for small vehicles operated by muscle power and/or electrically with a transverse control arm (11), which is arranged on a height adjustable steering rod (12), in which the steering rod (12) has two telescopic tubes (13, 14) and the inner tube (13) has at least two openings or grooves (16, 17) arranged at different heights, into which a snap-in element (28) that may move radially accommodated in the outer tube (14) may snap, and in which a height adjustment and locking device (15) is provided, which has a clamping sleeve (20) surrounding both tubes (13, 14) at their connecting point, which may be displaced against the force of a spring (21) along the inner tube (13) in the direction of the outer tube (14) and which is provided with a conically tapering end section (20.1) encompassing the outer tube (14) on its inside, which in the relaxed state of the spring (21) acts on an outer surface of the snap-in element (28) projecting radially outwards through an opening in the outer tube (14) and presses the snap-in element (28) radially inwards through this, **characterised in that** the spring (21) is arranged between a first slide bushing (24) arranged protected against torsion in the end section of the outer tube (14) with a radial opening (27) for the snap-in element (28) and a second slide bushing (29) surrounding the inner tube (13) and the clamping sleeve (20) is connected to the second slide bushing (29).

2. Steering device according to claim 1, **characterised in that** the outer surface of the snap-in element (28) is also made tapering corresponding to the conical end section (20.1) of the clamping sleeve (20).

3. Steering device according to claim 1 or 2, **characterised in that** the inner tube (13) has a flattened circumferential section (23) and the first slide bushing (24) has a corresponding flattened section (25) on its inner circumference, so that the flattened sections (23, 25) of the inner tube (13) and the first slide bushing (24) form anti-torsion protection of the inner tube (13) in relation to the outer tube (14).

4. Steering device according to claim 3, **characterised in that** the openings or grooves (16, 17) are arranged in the flattened circumferential section (23) of the inner tube (13).

5. Steering device according to one of the previous claims, **characterised in that** the bottom edge of the first slide bushing (24) forms pullout protection for the inner tube (13), which is provided with a radially screwed in screw (31) at its end, which strikes against the bottom edge of the first slide bushing (24), if the inner tube (13) is pulled too far out of the outer tube (14).

6. Steering device according to claim 5, **characterised in that** an access opening is provided in the outer tube (14) to the screw (31) on the inner tube and the access opening may be covered outwardly by a ring body (32), in which the ring body (32) forms a stop for the movement of the clamping sleeve (20).

7. Steering device according to one of the previous claims, **characterised in that** the edges of the openings or grooves (16, 17) of the inner tube (13) and the outer contour of the snap-in element (28) are made in such a way that on release of the outer surface of the snap-in element (28) through the conical section (20.1) of the clamping sleeve (20) the snap-in element (28) may be moved out of the openings or grooves (16, 17) of the inner tube (13) simply by the inner tube (13) moving in relation to the outer tube (14).

8. Steering device according to one of the previous claims, **characterised in that** the spring (21) is a helical spring.

9. Steering device according to one of the previous claims, **characterised in that** electrical and/or hydraulic lines (18) are guided inside the tubes (13, 14).

10. Steering device according to claim 9, **characterised in that** the lines (18) are made spiral-shaped.

## Revendications

1. Dispositif de direction pour petits véhicules à propulsion humaine et/ou électrique avec un bras transversal (11), qui est agencé au niveau d'une barre de direction (12) réglable en hauteur, dans lequel la barre de direction (12) présente deux tubes télescopiques (13, 14) et le tube intérieur (13) présente au moins deux ouvertures ou rainures (16, 17) ménagées à différentes hauteurs, dans lesquelles un élément d'enclenchement (28) logé radialement mobile dans le tube extérieur (14) peut s'enclencher, et dans lequel un dispositif de réglage en hauteur et de blocage (15) est prévu, qui présente une douille de serrage (20) comprenant les deux tubes (13, 14) à leur point de jonction, qui est déplaçable à l'encontre de la force d'un ressort (21) le long du tube intérieur (13) en direction du tube extérieur (14) et qui est dotée sur son côté intérieur d'une section d'extrémité (20.1) se rétrécissant de manière conique, entourant le tube extérieur (14), qui agit à l'état détendu du ressort (21) sur une surface extérieure, dépassant radialement vers l'extérieur à travers une ouverture dans le tube extérieur (14), de l'élément d'enclenchement (28) et pousse ainsi l'élément d'enclenchement (28) radialement vers l'intérieur, **caractérisé en ce que** le ressort (21) est agencé entre une première douille de glissement (24) agencée bloquée en rotation dans la section d'extrémité du tube extérieur (14) avec une ouverture de passage radiale (27) pour l'élément d'enclenchement (28) et une seconde douille de glissement (29) comprenant le tube intérieur (13) et la douille de serrage (20) est reliée à la seconde douille de glissement (29).

2. Dispositif de direction selon la revendication 1, **caractérisé en ce que** la surface extérieure de l'élément d'enclenchement (28) est également conçue de manière conique conformément à la section d'extrémité conique (20.1) de la douille de serrage (20).

3. Dispositif de direction selon la revendication 1 ou 2, **caractérisé en ce que** le tube intérieur (13) présente une section circonférentielle aplatie (23) et la première douille de glissement (24) présente au niveau de sa circonférence intérieure une section aplatie correspondante (25), de sorte que les sections aplaties (23, 25) du tube intérieur (13) et de la première douille de glissement (24) forment un blocage en rotation du tube intérieur (13) par rapport au tube extérieur (14).

4. Dispositif de direction selon la revendication 3, **caractérisé en ce que** les ouvertures ou rainures (16, 17) sont agencées dans la section circonférentielle aplatie (23) du tube intérieur (13).

5. Dispositif de direction selon l'une quelconque des revendications précédentes, **caractérisé en ce que** le bord inférieur de la première douille de glissement (24) forme une protection contre l'extraction pour le tube intérieur (13), qui est doté à son extrémité d'une vis vissée radialement (31), qui bute contre le bord inférieur de la première douille de glissement (24), lorsque le tube intérieur (13) est trop extrait du tube extérieur (14).

6. Dispositif de direction selon la revendication 5, **caractérisé en ce qu'**une ouverture d'accès à la vis (31) au niveau du tube intérieur est prévue dans le tube extérieur (14) et l'ouverture d'accès peut être recouverte vers l'extérieur par un corps annulaire (32), dans lequel le corps annulaire (32) forme une butée pour le déplacement de la douille de serrage (20).

7. Dispositif de direction selon l'une quelconque des revendications précédentes, **caractérisé en ce que** les bords des ouvertures ou rainures (16, 17) du tube intérieur (13) et le contour extérieur de l'élément d'enclenchement (28) sont configurés de sorte que lors de la libération de la surface extérieure de l'élément d'enclenchement (28) par la section conique (20.1) de la douille de serrage (20), l'élément d'enclenchement (28) peut être sorti des ouvertures ou rainures (16, 17) du tube intérieur (13) par le seul déplacement du tube intérieur (13) par rapport au tube extérieur (14).

8. Dispositif de direction selon l'une quelconque des revendications précédentes, **caractérisé en ce que** le ressort (21) est un ressort hélicoïdal.

9. Dispositif de direction selon l'une quelconque des revendications précédentes, **caractérisé en ce que** des conduites électriques et/ou hydrauliques (18) sont guidées à l'intérieur des tubes (13, 14).

10. Dispositif de direction selon la revendication 9 précédentes, **caractérisé en ce que** les conduites (18) sont réalisées en forme de spirale.
